# EUROPEAN PATENT SPECIFICATION

(11) **EP 0 905 432 B1**
(45) Date of publication and mention of the grant of the patent: **04.01.2006**
(21) Application number: 98117272.9
(22) Date of filing: 11.09.1998
(51) Int. Cl.: F16L 39/00, A61C 1/18

(54) **Connector for connecting two members**
Anschlussteil zum Verbinden von zwei Teilen
Raccord pour obtenir la connection de deux éléments

(30) Priority: 24.09.1997 JP 25819597
(43) Date of publication of application: 31.03.1999
(73) Proprietor: Nakanishi Inc., Kanuma-shi, Tochigi 322-8666 (JP)
(72) Inventor: Ito, Yukio, Kanuma-shi, Tochigi, 322-8666 (JP)
(74) Representative: Herrmann-Trentepohl, Werner

(56) References cited:
- EP-A- 0 470 324
- FR-A- 2 705 430
- US-A- 3 796 448

## Description

According to the preamble of claim 1, the present invention relates to a connector for connecting two members together, in particular to a connector used for connecting two members, for example, a handpiece body and a motor casing of a dental handpiece. Such a connector is known from FR-A-2 705 430.

Conventional connectors used in dental handpieces for providing connection between a handpiece body supporting a dental tool in its head section and a motor casing accommodating a motor for supplying driving force for the tool generally employ E-type connection according to IS03964-1977 (International Standard) or coupler connection.

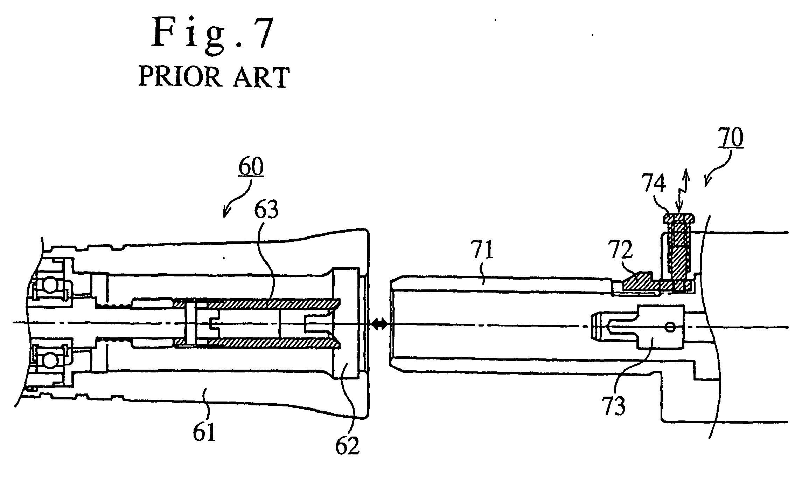

Fig. 7 shows the conventional E-type connection. Insert 71 projecting from the distal end of the motor casing 70 is inserted and received in sheath 61 at the proximal end of the handpiece body 60, and hook 72 on the outer surface of the insert 71 in its proximal portion engages annular step 62 on the inner surface of the sheath 61 in its proximal portion, thereby providing connection between the body 60 and the casing 70. Couplings 63 and 73 for transmitting motor output are also connected with each other. The body 60 may be disconnected from the casing 70 by pressing knob 74 so that the hook 72, which is steadily biased radially outward by a spring, is displaced radially inward and released from the engagement with the step 62. With this position, the handpiece body 60 is detached from the motor casing 70.

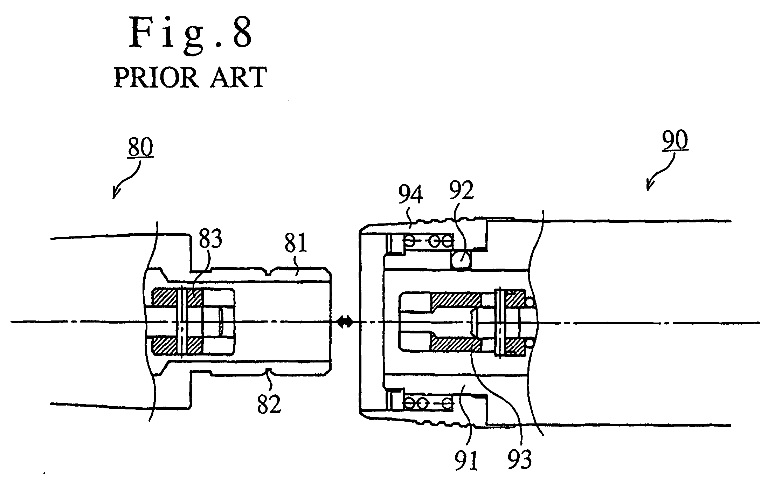

Fig. 8 shows another conventional connection, the coupler connection. Insert 81 projecting from the proximal end of the handpiece body 80 is inserted and received in sheath 91 at the distal end of the motor casing 90, with balls 92 arranged in the inner wall of the sheath 91 being fitted within recesses 82 on the outer surface of the insert 81, thereby providing connection between the body 80 and the casing 90. Couplings 83 and 93 in the body 80 and the casing 90, respectively, are also connected with each other. The body 80 may be disconnected from the casing 90 by distally sliding slide ring 94 on the casing 90 to allow radially outward displacement of the balls 92 out of the recesses 82, and distally withdrawing the insert 81 from the sheath 91.

In the E-type connection, the sheath 61 and the insert 71 constituting the connector inevitably have a long axial length, which makes the overall handpiece length excessively long. Even if the design of the couplings 63, 73 could be changed, shortening of the connector is limited by the length of the hook 72 since the hook 72 engages the annular step 62 at its distal portion and the knob 74 at its proximal portion. Accordingly, reduction in the axial length of the overall handpiece is restricted.

In the coupler connection, similarly, shortening of the connecting portion is limited by the axial displacement of the slide ring 94.

Accordingly, it is an object of the present invention to provide a connector for connecting two members such as a handpiece body and a motor casing, which has shorter axial length than the conventional connector.

It is another object of the present invention to provide a connector for connecting two members which can be connected or disconnected in one step, and which has a structure totally different from that of the conventional connector.

According to the present invention; there is provided a connector for connecting a first member and a second member comprising the features defined by claim 1.

The connector of the present invention may be used for connecting a first member and a second member, which may be selected from a variety of members. In particular, the present connector is preferably used for connecting a handpiece body and a motor casing of a dental handpiece. The connector may also be used for connecting decelerators having a sun gear and planetary gears for changing reduction ratio and torque in a plurality of stages.

The first member has an axially extending insert. The configuration of the insert is not particularly limited as long as it has a certain axial length for enabling insertion into the axial bore in the second member to be described. Preferably, the insert has a generally cylindrical shape.

The insert has a groove on its outer surface for providing a locking engagement with a ring member to be described later. The shape of the groove is not particularly limited as long as it receives and holds at least a part of the ring member therein. The groove may be an annular groove or a dent. It is preferred that the cross section of the groove is rectangular so as to provide a surface for engagement with the ring member.

The second member has a bore extending axially through the member for coaxially receiving the insert therein. The bore has a diameter large enough to receive the insert.

In the bore, a ring member is accommodated. The ring member is positioned in a plane substantially transverse to the axial bore, and is displaceable between the eccentric and concentric positions with respect to the axial bore in this plane.

The ring member has the inner diameter large enough to allow passage of the insert therethrough when the ring member is in the concentric position. It is preferred that the inner diameter of the ring member is substantially the same or slightly larger than the diameter of the insert so that the insert may be inserted and withdrawn through the ring member smoothly, while the diameter of the overall connector is kept minimum. The inner diameter and the thickness of the ring member is such that a part of the ring member fits in the groove on the insert for providing interlocking between the insert and the ring member, and thus the first and the second members, when the insert is in the axial bore and the ring member is in the eccentric position.

The inner edge of the ring member may be entirely or partially beveled for providing a means for displacing the ring member from the eccentric position to the concentric position. A portion of the beveled inner edge engages and cooperates with a portion of the edge of the insert facing to the ring member as the insert advances into the axial bore to displace the ring member to the concentric position as will be described later. The bevel here includes a rounded corner or other surface as long as the above function of the beveled inner edge is achieved.

In order to keep the ring member in the eccentric position, a biasing member may be employed for applying biasing force to the ring member. The biasing member may be positioned in contact with the circumferential surface of the ring member in the plane substantially transverse to the axial bore, and steadily applies a diametral force to the ring member to resiliently keep the ring member in the eccentric position. Examples of the biasing member may include a rubber member or a spring member, and particularly preferred is a coil spring.

The ring member may be provided with an operating member attached to or made integral with the ring member at a location diametrally opposite to the biasing member in the plane substantially transverse to the axial bore, and extending from the circumferential surface of the ring member out of the second member. By pressing the operative member, the ring member may be temporarily displaced from the eccentric position to the concentric position against the biasing force applied to the ring member by the biasing member. The operating member may be formed in a rod-like shape and form a operating knob on the outer surface of the second member.

The ring member is retained in position in the axial bore by retaining means. The retaining means holds the ring member in the plane substantially transverse to the axial bore, and prevents undesired axial movement of the ring member, but allows smooth radial displacement of the ring member in the plane between the eccentric and the concentric positions.

The retaining means is in the form of a radially enlarged portion of the axial bore including the plane of displacement of the ring member. The enlarged portion has larger diameter than the rest of the axial bore, and the width substantially the same or slightly wider than the thickness of the ring member for preventing undesired axial displacement of the ring member. The cross-sectional shape of the enlarged portion may be circular or elliptical.

For facilitating placement of the ring member in the concentric position with respect to the axial bore, the enlarged portion has a wall which contacts with a portion of the circumferential surface of the ring member when in the concentric position for providing a stop for the ring member.

Further, the enlarged portion may be provided with a pit in the circumferential wall thereof for accommodating the biasing member.

Circumferential alignment of the first and the second members upon connection may be achieved by an alignment pin provided on the first member and an alignment hole provided in the second member. Fitting the alignment pin in the alignment hole will provide automatic circumferential alignment of the first and the second members.

Next, examples of the operation for connecting the first and the second members are described below.

Before connecting the first and the second members, the ring member in the plane transverse to the axial bore may be kept in the eccentric position by the biasing force applied by the biasing member.

When the insert is inserted into the axial bore, a portion of the edge of the insert facing to the ring member first contacts with a portion of the inner edge, preferably beveled, of the ring member. As the insert is further advanced with its edge engaging the ring member, the ring member is automatically displaced to the concentric position against the biasing force. A portion of the circumferential surface of the ring member contacts a stop in the axial bore to facilitate the placement of the ring member in the concentric position and to prevent further accidental displacement of the ring member. With the ring member in the concentric position, the insert is allowed to advance through the ring member.

When the groove on the insert comes into alignment with the ring member, the ring member resiliently returns to the eccentric position due to the biasing force applied by the biasing member, and a portion of the ring member fits in the groove to lock the insert relative to the ring member. This locking prevents axial movement of the insert, thereby providing firm connection of the first and the second members.

For disconnecting the two members, the ring member is temporarily displaced to the concentric position preferably by manually pressing the operating member against the biasing force. With the ring member in the concentric position, the insert can be withdrawn from the axial bore through the ring member, thereby disconnecting the first and the second members.

Alternatively, the first and the second members may also be connected by temporarily displacing the ring member to the concentric position in a manner described for disconnection, i.e. by manually pressing the operating member against the biasing force. With the ring member in the concentric position, the insert can be inserted into the axial bore through the ring member. The operating member is then released to resiliently return the ring member to the eccentric position to lock the insert in the same manner as described above.

According to the present invention, since the locking and unlocking action of the ring member takes place in a single plane substantially transverse to the axial bore, the axial length of the connector is remarkably reduced.

Further, with the beveled inner edge of the ring member cooperating with the insert to displace the ring member to the concentric position against the biasing force, and the biasing member biasing the ring member to the eccentric position, the connection of the first and the second members can be effected by simply inserting the insert through the ring member.

A preferred embodiment of the present invention is described in detail with reference to the attached drawings wherein:
Fig. 1 is a side view of a dental handpiece wherein a handpiece body and a motor casing with an embodiment of the connector of the present invention are shown in a disconnected state;
Fig. 2 is a perspective view of the dental handpiece of Fig. 1 wherein a handpiece body and a motor casing with an embodiment of the connector of the present invention are shown in a disconnected state;
Fig. 3 is a distal end view of the motor casing of Fig. 1;
Fig. 4 is a cross sectional view taken along line A-A in Fig. 1;
Fig. 5 is a perspective view of a ring member used in the embodiment of Fig. 1;
Figs. 6 (a) to 6(c) show in longitudinal sectional views how the ring member fits in the annular recess on the insert;
Fig. 7 is a partially fragmentary sectional view of a dental handpiece with a conventional E-type connection; and
Fig. 8 is a partially fragmentary sectional view of a dental handpiece with a conventional coupler connection.

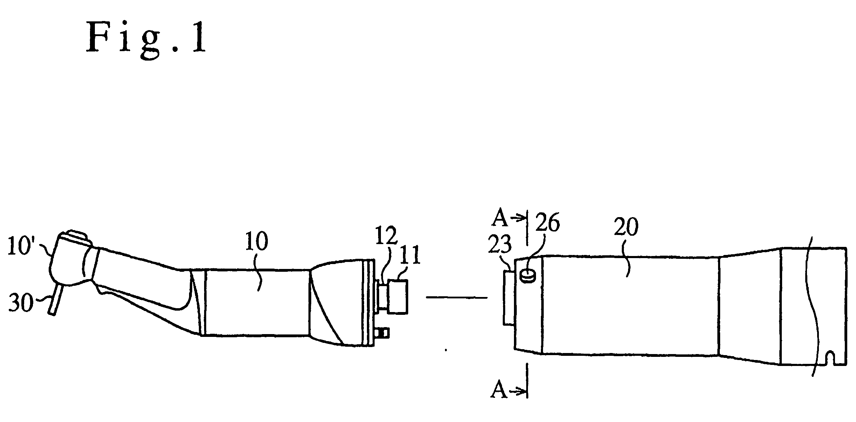

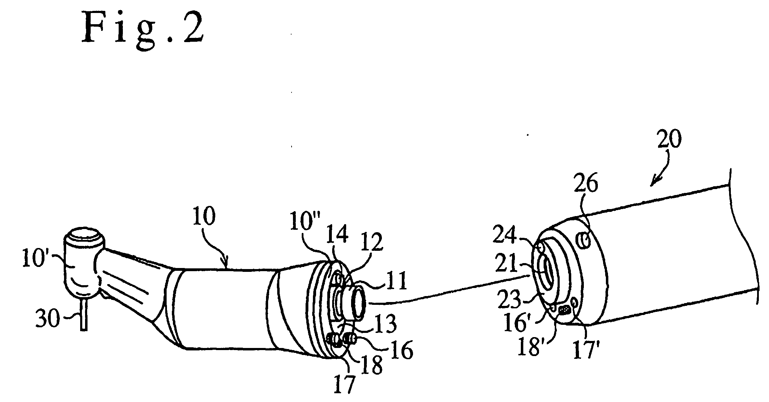

Figs. 1 and 2 are side and perspective views, respectively, of a dental handpiece composed of handpiece body 10 and motor casing 20, shown in a disconnected state. The body 10 has head 10' at its distal end, which holds dental treatment tool 30 therein. The tool 30 is rotatably driven at high speed by torque generated by a motor (not shown) accommodated in the casing 20 and transmitted to the tool 30 via motor output transmitting members such as a shaft and gears (not shown). The handpiece is connected at the proximal end of the casing 20 by means of a dental hose (not shown) to a dental unit (not shown), which acts as a source of fluids and light. The fluids such as air and water are transmitted through fluid passages (16, 16', 17, 17') provided through the handpiece to the head, and injected onto the treatment site as chip air or cooling water. Similarly, the light is transmitted through light passages (18, 18') provided through the handpiece, and emitted for illuminating the treatment site. Therefore, connection between the body 10 and the casing 20 are associated with connections between the motor output transmitting members, between fluid passages, and between light passages, as will be described later.

In this embodiment, the body 10 and the casing 20 are the first and the second members, respectively, to be connected together with the connector of the present invention.

The handpiece body 10 has housing section 10" in the proximal portion thereof. Out of the proximal end face of the housing section 10" axially projects insert 11, which is of a generally cylindrical shape and has an annular groove 12 on the outer surface thereof. Annular space 13 is defined between the inner wall of the housing section 10" and the outer surface of the insert 11. In the annular space 13 above the insert 11 is provided alignment pin 14.

The motor casing 20 is provided with axial bore 21 extending through the casing 20 for coaxially receiving the insert 11. At the distal end of the axial bore 21 is coaxially provided annular projection 23 disposed on the distal end face of the casing 20. The projection 23 is to be fitted in the annular space 13 in the housing section 10", and has alignment hole 24 therein for receiving the alignment pin 14 in the housing section 10" .

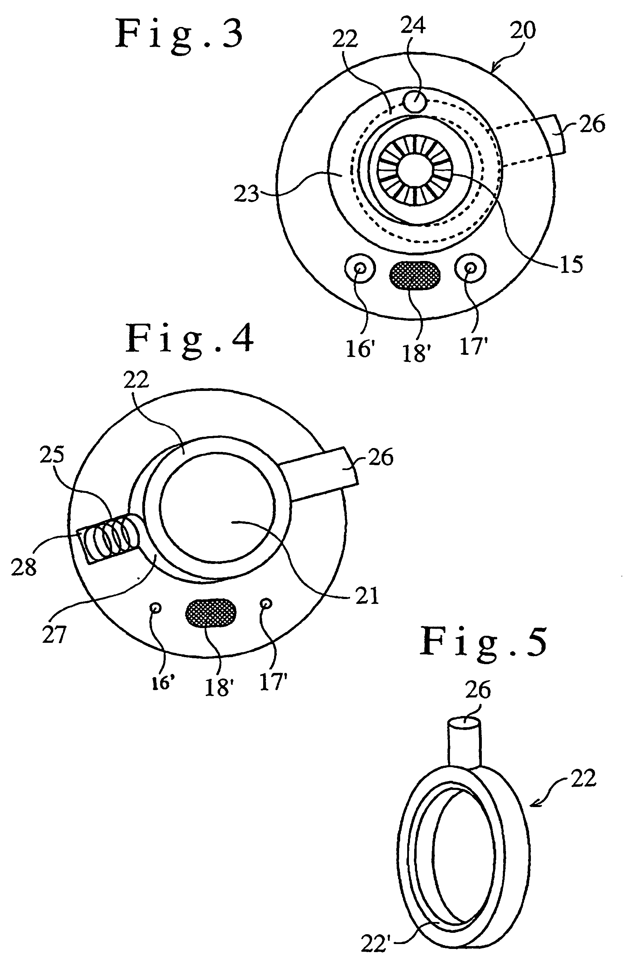

Fig. 3 shows the distal end face of the motor casing 20, and Fig. 4 illustrates the cross-section of the same casing 20 taken along line A-A in Fig. 1. The axial bore 21 is provided with annular channel 27 on the inner surface thereof for accommodating ring member 22. The annular channel 27 has the larger diameter than the rest of the axial bore 21. A portion of the base of the channel 27 is further depressed to form pit 28 for receiving spring 25 therein. A through hole is provided diametrally opposite to the pit 28 in the base of the channel 27 out of the wall of the motor casing 20.

The ring member 22 has a beveled distal inner edge 22', and on the outer circumferential surface of the ring member 22, knob 26 acting as an operating member is attached at its inner end as shown in Fig. 5. The ring member 22 is accommodated in the channel 27, with the knob 26 projecting through the through hole out of the casing 20 at its outer end.

The spring 25 is positioned in the pit 28 diametrally opposite to the knob 26, and biases the ring member 22 diametrally to keep the ring member 22 slightly eccentric to the axis of the axial bore 21 (Fig. 4) . In this position, a portion of the ring member 22 is positioned radially inside the inner wall of the axial bore 21 as shown in Fig. 3. By pressing the knob 26 from the outside of the casing 20, the ring member 22 is temporarily displaced against the biasing force of the spring 25 to be concentric with the axial bore 21. In this position, the inner wall of the ring member 22 registers with and coplanar with the inner wall of the axial bore 21.

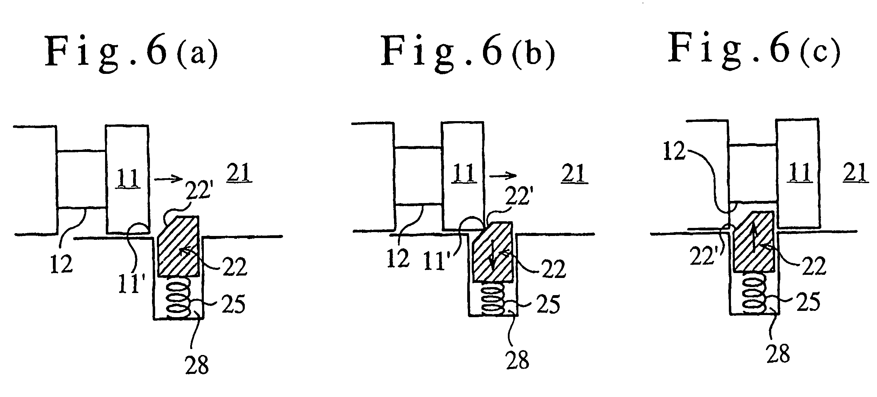

Connection of the handpiece body 10 and the motor casing 20 may be effected by inserting the insert 11 on the body 10 into the axial bore 21 in the casing 20, while the alignment pin 14 is aligned with and inserted into the alignment hole 24, to thereby automatically aligning the body 10 and the casing 20 both axially and circumferentially. This operation is described in detail below with reference to Fig. 6.

Fig. 6 shows in section the insert 11 and the ring member 22 constituting the connector between the body 10 and the casing 20, with a portion of the insert 11 as well as associated knob 26 and a portion of the channel 27 being removed for the sake of clarification in illustration.

When the insert 11 on the body 10 is inserted into the axial bore 21 through the annular projection 23, with the ring member 22 in the eccentric position in the annular channel 27 as shown in Fig. 6(a), the proximal edge 11' of the insert 11 first contacts the beveled distal inner edge 22' of the ring member 22 as illustrated in Fig. 6(b) to displace the ring member 22 against the biasing force applied by the spring 25. In Fig. 6(b), this displacement is shown as downward movement indicated by the arrow. With further proximal advancement of the insert 11, the ring member 22 is further displaced until it becomes concentric with the axial bore 21, which allows the insert 11 to advance through the center hole of the ring member 22.

As the insert 11 further advances proximally through the ring member 22, the annular groove 12 on the outer surface of the insert 11 is aligned with the ring member 22, where the ring member 22 is urged into the initial eccentric position by the spring 25, with a portion of the ring member 22 fitting in a portion of the annular groove 12 as shown in Fig. 6(c). This fitting of the ring member 22 in the annular groove 12 on the insert 11, along with the engagement of the proximal end face of the ring member 22 with the stepped wall of the annular groove 12 resists the axial movement of the handpiece body 10 and the motor casing 20 relative to each other, thereby connecting the body 10 and the casing 20 firmly.

The firmly connected body 10 and the casing 20 may be disconnected easily by pressing the knob 26 to displace the ring member 22 into concentric position, and distally withdrawing the insert 11 from the axial bore 21, to detach the body 10 from the casing 20.

The above described connection between the body 10 and the casing 20 is accompanied by connections between the motor output transmitting members, between fluid passages, and between light passages at the connector. The motor output transmitting members, for example, are connected preferably by means of gears 15 provided at the connecting ends of the transmitting members. The gears 15 are positioned in the insert 11 and in the axial bore 21, so that the gears 15 instantly meshes upon connecting the body 10 and the casing 20. Such gear connection eliminates the need for axial spacing, which is required for the conventional couplings (63, 73; 83, 93 in Figs. 7 and 8).

The fluid passages and the light passages are also connected upon connection of the body 10 to the casing 20, which may be achieved in conventional manners. For example, referring to Fig. 2, chip air pipe 16 and water pipe 17 in the body 10 are directly and tightly connected to chip air hole 16' and water hole 17' in the casing 20. The optical fiber 18 in the body 10 directly and tightly abuts the optical fiber 18' in the casing 20 to provide optical communication.

## Claims

1. A connector for connecting a first member (10) and a second member (20) comprising:
an axially extending insert (11) provided on the first member (10) and having a groove (12) on its outer surface,
an axial bore (21) in the second member (20) for coaxially receiving the insert (11),
a ring member (22) accommodated in the axial bore (21), and displaceable between eccentric and concentric positions with respect to the axial bore in a plane substantially transverse to the axial bore,
wherein said ring member (22) is capable of fitting in the groove (12) on the insert (11) received in the axial bore (21) when in said eccentric position to interlock the first and second members,
said connector further comprising retaining means (27) for retaining the ring member (22) in said plane in the axial bore (21), said retaining means (27) being a radially enlarged portion of the axial bore (21), wherein said enlarged portion accommodates said ring member (22),
**characterized in that**
said enlarged portion has a wall which contacts with a portion of a circumferential surface of the ring member (22) when in the concentric position, wherein said wall provides a stop for the ring member for facilitating placement of the ring member in the concentric position with respect to the axial bore.

2. The connector of claim 1 **characterized in that** further comprising a biasing member (25) for applying biasing force to the ring member (22) to keep the ring member in the eccentric position.

3. The connector of claim 2 **characterized in that** said biasing member (25) is a coil spring disposed in contact with a circumferential surface of the ring member (22).

4. The connector of claim 1 **characterized in that** said retaining means (27) allow radial displacement of the ring member (22) between the concentric and eccentric positions and prevent axial movement of the ring member.

5. The connector of claim 1 **characterized in that** said enlarged portion has a pit (28) for accommodating the biasing member (25).

6. The connector of claim 2 **characterized in that** further comprising displacing means (26, 22') for displacing the ring member (22) from the eccentric position into the concentric position against the biasing force applied by the biasing member (25) for allowing insertion and withdrawal of the insert (11) with respect to the ring member (22).

7. The connector of claim 6 **characterized in that** said displacing means (26, 22') includes an operating member (26) provided on the ring member (22) at a location diametrally opposite to the biasing member (25) and extending out of the second member (20).

8. The connector of claim 6 **characterized in that** said ring member (22) has a beveled inner edge (22') facing to the first member (10) for engaging with the insert (11) when the ring member (22) is in the eccentric position, said displacing means (26, 22') includes said beveled inner edge (22') of the ring member.

9. The connector of claim 1 **characterized in that** further comprising an alignment pin (14) provided on the first member (10) and an alignment hole (24) provided in the second member (20), wherein said alignment pin (14) is capable of being fit in said alignment hole (24) for providing circumferential alignment of the first and the second members.

## Patentansprüche

1. Verbindungsstück zum Verbinden eines ersten Teils (10) und eines zweiten Teils (20), aufweisend:
ein sich axial erstreckendes Einsetzteil (11), das an dem ersten Teil (10) vorgesehen ist und das an seiner äußeren Oberfläche eine Nut (12) aufweist, eine axiale Bohrung (21) in dem zweiten Teil (20) zum koaxialen Aufnehmen des Einsetzteils (11),
ein Ringteil (22), das in der axialen Bohrung (21) aufgenommen ist und das zwischen exzentrischen und konzentrischen Stellungen bezüglich der axialen Bohrung (21) in einer im Wesentlichen quer zu der axialen Bohrung (21) angeordneten Ebene verlagerbar ist,
wobei das Ringteil (22) in der Lage ist, in die Nut (12) an dem in der axialen Bohrung (21) aufgenommenen Einsetzteil (11) einzugreifen, wenn es sich in der exzentrischen Stellung befindet, um die ersten und zweiten Teile miteinander zu verriegeln,
wobei das Verbindungsstück weiterhin Rückhaltemittel (27) zum Zurückhalten des Ringteils (22) in der Ebene in der axialen Bohrung (21) aufweist, die als ein radial erweiterter Bereich der axialen Bohrung (21) ausgebildet sind, wobei das Ringteil (22) in dem erweiterten Bereich aufgenommen ist,
**dadurch gekennzeichnet, dass** der erweiterte Bereich eine Wand besitzt, die mit einem Bereich einer Umfangsoberfläche des Ringteils (22) in Kontakt steht, wenn sich dieses in der konzentrischen Stellung befindet, wobei die Wand einen Anschlag für das Ringteil bildet, um ein Verbringen des Ringteils in die konzentrische Stellung in Bezug auf die axiale Bohrung zu erleichtern.

2. Verbindungsstück nach Anspruch 1, **gekennzeichnet durch** ein Vorspannteil (25) zum Einwirken mit einer Kraft auf das Ringteil (22), um das Ringteil in der exzentrischen Stellung zu halten.

3. Verbindungsstück nach Anspruch 2, **dadurch gekennzeichnet, dass** das Vorspannteil (25) eine Spiralfeder ist, die mit einer Umfangsoberfläche des Ringteils (22) in Kontakt stehend angeordnet ist.

4. Verbindungsstück nach Anspruch 1, **dadurch gekennzeichnet, dass** die Rückhaltemittel (27) ein radiales Verlagern des Ringteils (22) zwischen der konzentrischen und der exzentrischen Stellung erlauben und eine axiale Bewegung des Ringteils verhindern.

5. Verbindungsstück nach Anspruch 1, **dadurch gekennzeichnet, dass** der erweiterte Bereich eine Vertiefung (28) zum Aufnehmen des Vorspannteils (25) aufweist.

6. Verbindungsstück nach Anspruch 2, **gekennzeichnet durch** Verlagerungsmittel (26, 22') zum Verlagern des Ringteils (22) aus der exzentrischen Stellung in die konzentrische Stellung gegen die **durch** das Vorspannteil (25) ausgeübte Vorspannkraft, um ein Einführen und Entnehmen des Einsetzteils (11) bezüglich des Ringteils (22) zu ermöglichen.

7. Verbindungsstück nach Anspruch 6, **dadurch gekennzeichnet, dass** die Verlagerungsmittel (26, 22') ein Bedienteil (26) beinhalten, das an dem Ringteil (22) in einer dem Vorspannteil (25) diametral gegenüberliegenden Lage angeordnet ist und das sich aus dem zweiten Teil (20) heraus erstreckt.

8. Verbindungsstück nach Anspruch 6, **dadurch gekennzeichnet, dass** das Ringteil (22) eine dem ersten Teil zugewandte abgeschrägte Innenkante (22') besitzt, um in das Einsetzteil (11) einzugreifen, wenn das Ringteil (22) in der exzentrischen Stellung ist, wobei die Verlagerungsmittel (26, 22') die abgeschrägte Innenkante (22') des Ringteils beinhalten.

9. Verbindungsstück nach Anspruch 1, **gekennzeichnet durch** einen an dem ersten Teil (10) vorgesehenen Ausrichtstift (14) und ein in dem zweiten Teil (20) vorgesehenes Ausrichtloch (24), wobei der Ausrichtstift (14) in das Ausrichtloch (24) einpassbar ist, um für eine Ausrichtung der ersten und zweiten Teile in Umfangsrichtung zu sorgen.

## Revendications

1. Raccord permettant de relier un premier élément (10) et un second élément (20) comprenant :
un insert (11) s'étendant axialement disposé sur le premier élément (10) et ayant une rainure (12) sur sa surface extérieure,
un alésage axial (21) dans le second élément (20) permettant de recevoir l'insert (11) coaxialement,
un élément annulaire (22) logé dans l'alésage axial (21), et mobile entre les positions excentrique et concentrique par rapport à l'alésage axial dans un plan sensiblement transversal à l'alésage axial,
dans lequel ledit élément annulaire (22) peut être placé dans la rainure (12) sur l'insert (11) reçu dans l'alésage axial (21) quand il est dans ladite position excentrique pour emboîter lesdits premier et second éléments,
ledit raccord comprenant en outre des moyens de retenue (27) permettant de retenir l'élément annulaire (22) dans ledit plan dans l'alésage axial (21), lesdits moyens de retenue (27) étant une partie agrandie radialement de l'alésage axial (21), dans lequel ladite partie agrandie loge ledit élément annulaire (22)
**caractérisé en ce que** ladite partie agrandie comporte une paroi qui entre en contact avec une partie d'une surface circonférentielle de l'élément annulaire (22) quand il est dans la position concentrique, ladite paroi fournissant une butée pour l'élément annulaire pour faciliter le placement de l'élément annulaire dans la position concentrique par rapport à l'alésage axial.

2. Raccord selon la revendication 1, **caractérisé en ce qu'**il comprend en outre un élément de sollicitation (25) permettant d'exercer une force de sollicitation sur l'élément annulaire (22) pour maintenir l'élément annulaire dans la position excentrique.

3. Raccord selon la revendication 2, **caractérisé en ce que** ledit élément de sollicitation (25) est un ressort hélicoïdal disposé en contact avec une surface circonférentielle de l'élément annulaire (22).

4. Raccord selon la revendication 1, **caractérisé en ce que** lesdits moyens de retenue (27) permettent le déplacement radial de l'élément annulaire (22) entre les positions concentrique et excentrique et empêchent le déplacement axial de l'élément annulaire.

5. Raccord selon la revendication 1, **caractérisé en ce que** ladite partie agrandie comporte un trou (28) permettant de loger l'élément de sollicitation (25).

6. Raccord selon la revendication 2, **caractérisé en ce qu'**il comprend en outre des moyens de déplacement (26, 22') permettant de déplacer l'élément annulaire (22) de la position excentrique dans la position concentrique à l'encontre de la force de sollicitation exercée par l'élément de sollicitation (25) pour permettre l'insertion et le retrait de l'insert (11) par rapport à l'élément annulaire (22).

7. Raccord selon la revendication 6, **caractérisé en ce que** lesdits moyens de déplacement (26, 22') comprennent un élément de commande (26) disposé sur l'élément annulaire (22) à un emplacement diamétralement opposé à l'élément de sollicitation (25) s'étendant hors du second élément (20).

8. Raccord selon la revendication 6, **caractérisé en ce que** ledit élément annulaire (22) comporte un bord intérieur biseauté (22') faisant face au premier élément (10) pour se mettre en prise avec l'insert (11) quand l'élément annulaire (22) est dans la position excentrique, ledits moyens de déplacement (26, 22') comprennent le bord intérieur biseauté (22') de l'élément annulaire.

9. Raccord selon la revendication 1 **caractérisé en ce qu'**il comprend en outre une cheville d'alignement (14) disposée sur le premier élément (10) et un trou d'alignement (24) disposé dans le second élément (20), dans lequel ladite cheville d'alignement (14) peut être placée dans ledit trou d'alignement (24) pour fournir un alignement circonférentiel des premier et second éléments.
